# EUROPEAN PATENT APPLICATION

(11) **EP 2 030 955 A1**
(43) Date of publication of application: **04.03.2009**
(21) Application number: 07114298.8
(22) Date of filing: 14.08.2007
(51) Int. Cl.: C03C 27/06, E04B 2/72

(54) **A glazing joint**

(71) Applicant: Lafuco A/S, 2635 Ishøj (DK)
(72) Inventor: Hansen, Frank, 8700, Horsens (DK); Larsen, Søren Peter, 2400, København NV (DK)
(74) Representative: Inspicos A/S

(57) **Abstract**

A glazing joint for joining side surfaces at least two sheets of glass to each other by means of the glazing joint. A glass adapted to be fastened to the glazing joint. A glass wall comprising the glazing joint and two sheets of glass. A method of erecting a glass wall comprising the glazing joint.

## Description

### FIELD OF THE INVENTION

The present invention relates to a glazing joint for joining side surfaces at least two sheets of glass to each other by means of the glazing joint. Moreover, the present invention relates to a glass adapted to be fastened to the glazing joint. Furthermore, the present invention relates to a glass wall comprising the glazing joint and two sheets of glass. Finally, the present invention relates to a method of erecting a glass wall comprising the glazing joint.

### BACKGROUND OF THE INVENTION

In modern commercial buildings it is more and more frequent that walls are formed partly or completely out of glass. Glass is used as a means for allowing daylight to propagate into the centre of the building, as a means of increasing the transparency of the organisation and/or as an architectural tool. Most glass walls are formed out of a plurality of glass sheets which are joint to each other so as to define the glass wall.

WO 2004/039908 discloses a glazing joint especially for glazed partition walls. The glazing joint defines recesses each for receiving a sheet of glass, so as to allow the glasses to be fastened to the glazing joint. Due to the provision of the recesses, the glasses may be fastened to each other via the glazing joints in predetermined angular positions.

Other background art may be seen in US 2005/0126090 and EP 1 435 424.

When glass walls are installed in buildings, construction workers are often faced with the fact that the geometry of most buildings deviate from construction drawings in that walls, floors or ceilings are uneven or are not provided in the correct angles relative to each other. As an example walls and floors which are supposed to be provided at right angles to each other may be provided in an angle different form such a right angle. Such deviations make it more difficult to install the glass walls, and, thus, it is desirable that one or more of the elements of the glass wall allow the glass wall to be adapted to its surroundings.

Accordingly, it is an object of a preferred embodiment of the present invention to provide a glazing joint which allows two sheets of glass to be fastened to each other in an infinite number of angular positions.

Moreover, it is an object of a preferred embodiment of the present invention to provide an alternative to known solutions.

Furthermore, it is an object of a preferred embodiment of the present invention to enhance the versatility of glass walls as an architectural tool.

### DESCRI PTI ON OF THE I NVENTI ON

I n FIRST aspect the present invention relates to a glazing joint for joining at least two sheets of glass to each other, each glass defining a front and a rear surface interconnected by an side surface, the glazing joint defining one or more fastening surfaces for fastening one side surface of each sheet of glass to the glazing joint, wherein the glazing joint is adapted to allow the sheets of glass to be fastened to the glazing joint in an infinite number of angular positions relative to each other.

One advantage of the glazing joint of the present invention is, that the glazing joint allows construction workers to adjust two sheets of glass to be joined to each other, by rotating one of said sheets relative to the other sheet and about the glazing joint. This allows the construction workers to adapt the glass wall to the geometry of location at which the glass wall is to be erected, by choosing the appropriate relative angular position of the two sheets of glass.

From a manufacturing point of view, the glazing joint according to the present invention allows a manufacturer to produce one versatile glazing joint which may be used to position two sheets of glass in an infinite number of positions, rather than manufacturing a large number of different glazing joints each of which allows two sheets of glass to be positioned in a predetermined and non-adjustable angular position relative to each other. Such a versatile glazing joint is also desirable from the construction workers point of view as he only needs to keep a stock of one kind of glazing joint instead of a plurality of different glazing joints.

From an architectural point of view, the glazing joint according to present invention increases the design freedom as most relative angles between two sheets of glass is now possible. It will be appreciated that this is desirable from an architectural point of view, as most architects constantly seeks new ways of expressing themselves.

The glass walls may be adapted to be used indoor and/or outdoor. Moreover, the glass walls according to the present invention may be adapted to allow other sheets of material to be joined to the sheets of glass by means of the glazing joint according to the present invention. Such other materials may be sheets of metal, wood, plastics, etc.

The glass may be natural or artificial glass, such as plexiglass. Moreover, the glass may be laminated, hardened, coloured, frosted and/or provided with a film, such as a film for preventing heat and/or ultraviolet radiation from propagating through the glass.

The glass defines a front and a rear surface which in most embodiments extend parallel to each other. The front and rear surface are separated by an side surface which may define a plurality of sections. As an example a quadrangular sheet of glass may define four edge sections.

The sheets of glass may be provided in any known thicknesses such as 4 mm, such as 6 mm, such as 8 m m , such as 10 mm, such as 12 m m, such as 14 m m, such as 16 mm, such as 1 8 mm, such as 20 mm, such as 22 mm, such as 24 mm, such as 26 mm, such as 28 mm, such as 30 mm.

The glazing joint may be provided in any appropriate thickness such as 4 mm, such as 6 mm, such as 8 m m , such as 10 mm, such as 12 m m, such as 14 m m, such as 16 mm, such as 1 8 mm, such as 20 mm, such as 22 mm, such as 24 mm, such as 26 mm, such as 28 mm, such as 30 mm.

In order to allow the sheets of glass to be fastened to the glazing joint, the glazing joint may define one or more fastening surfaces for fastening one side section of each sheet of glass to the glazing joint. In one embodiment, the glazing joint defines one fastening surface covering the entire outer surface of the glazing joint. In another embodiment, the glazing joint defines sections on its outer surface, each of such sections defines a fastening surface.

The fastening surface may be adapted to be adhered to the side section of a sheet of glass. In one embodiment, an adhesive is provided on the fastening surface. The adhesive may be covered by a removable release liner adapted to protect the adhesive prior to use, e.g. such that the adhesive is protected from loosing its tackiness due to contamination by dirt particles, which are often present at construction sites. Alternatively, or as a supplement, a layer of adhesive may be provided on the side surface of one of the sheets of glass so as to allow said sheet of glass to be adhered to the glazing joint.

The glazing joint may be made from a material which is more flexible than the glass, such as wood, PVC, silicone, natural and synthetic rubber. In one embodiment, light emitting means are integrated into the glazing joint, for providing a decorative effect or for allowing light to propagate inside the glass. Such light emitting means may be a light emitting diode.

The glazing joint may be adapted to allow two sheets of glass to be fastened to the glazing joint in an infinitive number of angular positions within a predetermined range of angels. As an example a first of two sheets of glass may - relative to the second sheet of glass - be adapted to be fastened to the glazing joint in an infinitive number of angular positions with in the range of 20-240 degrees, such as 60-300 degrees, such as 90-270 degrees, such as 120-240 degrees, such as 150-210 degrees.

In one embodiment, the abovementioned angular section is at least partly defined by the geometry of the sheets of glass, such as by their thickness, i.e. the distance between the front and the rear surface, or by the geometry of the side surface.

In order to allow the sheets of glass to be fastened/adhered to the glazing joint in an infinite number of positions, the glazing joint may define a circular cross-section. Moreover, one or more of the side surfaces of each sheet of glass may define a recess for receiving the glazing joint. The recess may have a concave cross-section corresponding to the outer surface of the glazing joint. Accordingly, the concave cross-section may define a section of a circle having substantially the same radius as the raduis of a circular glazing element.

The glazing joint may be thicker than or thinner than the thickness of the sheets of glass. In one embodiment the cross-sectional thickness/diameter of the glazing joint is 125 percent of the thickness of at least one of the sheets of glass (i.e. the glazing joint is 25% thicker than the glass sheet), such as 150 percent, such as 175 percent, such as 200 percent, such as 250 percent, such as 300 percent such as 400 or 500 percent. In another embodiment, the cross-sectional thickness/diameter of the glazing joint is 80 percent of the thickness of at least one of the sheets of glass, such as 75 percent, such as 60 percent, such as 50 or 40 percent.

In one embodiment, the glazing joint is adapted to allow visual inspection through any part of the front and/or rear surface. Accordingly in the latter embodiment, the glazing joint is shaped such that when the glazing joint is fastened/adhered to the side surface of the sheet of glass, neither the front nor the rear surface is contacting the glazing joint. It will be appreciated that such an arrangement provides a cleaning friendly outer surface of the glass wall as well as an appealing design, with smooth glass surfaces which are not covered by means for joining the sheets of glass.

Moreover, the glazing joint may be transparent. Such transparent joints between sheets of glass in not possible when glasses are joined by means of conventional joint filler, as it is practically impossible to create joints without air pockets. However as the glazing joint according to the present invention may be manufactured under controlled industrial conditions, e.g. by extrusion or moulding, air pockets may be prevented. It will be appreciated, that prevention of such air pockets is desirable from an architectural point of view. Moreover, prevention of air pockets increases the strength of the joint, which is desirable from a construction point of view.

In a SECOND aspect the present invention relates to a sheet of glass adapted to be adhered to a glazing joint according to the first aspect of the invention, wherein one side surface of the sheet of glass defines a recess for receiving the glazing joint.

The invention according to the second aspect may comprise any combination of features and/or elements of the invention according to the first aspect.

In one embodiment, a bevelled surface is defined between the recess and each of the front and the rear surface. One advantage of providing a bevelled surface is that the possible relative angular positions of two sheets of glass having such bevelled surfaces are increased. It will be appreciated, that the more acute the angle defined between the bevelled surface and the front and/or rear surface of the sheet of glass is, the larger the angle between the two most extreme positions of two sheets of glass may be.

In a THIRD aspect, the present invention relates to a glass assembly comprising two sheets of glass according to the second aspect of the invention and a glazing joint according to the first aspect of the invention, wherein one side surface of each of the two sheets of glass is fastened to the glazing joint.

The invention according to the third aspect may comprise any combination of features and or elements of the invention according to the first and/or second aspect.

It will be appreciated that in some embodiments of the present invention, a glass wall is defined by means of a plurality of glazing joints and a plurality of sheets of glass.

In one embodiment, the one side surface of each of the two sheets of glass is adhered to the glazing joint.

In a FOURTH aspect, the present invention relates to a method of joining two sheets of glass according to the second aspect of the invention to a glazing joint according the first aspect of the invention, the method comprising the steps of:
- providing the two sheets of glass,
- providing the glazing joint,
- applying an adhesive to the outer surface of the glazing joint and/or one or more of the recesses of the sheets of glass, and
- moving the recesses of the sheets of glass into engagement with the glazing joint.

In one embodiment the method further comprises the step of curing the adhesive, e.g. by means of an UV-source.

### DESCRI PTI ON OF THE FIGURES

Figs. 1a and 1b disclose two sheets of glasses joined to each other by means of glazing joint according to the present invention,
Fig. 2 illustrates possible rotational positions of two sheets of glass joined to each other by means of a glazing joint according to the present invention,
Fig. 3 illustrates three sheets of glass joined to each other by means of the glazing joint according to the present invention,
Fig. 4 illustrates a curved glass joined to two sheets of glass by means of the glazing joint according to the present invention,
Fig. 5 illustrates a curved glass surface made by means of a plurality of sheets of glass and glazing joints according to the present invention, and
Figs. 6 and 7 illustrate two sheets of glass joint to each other by means of a glazing element according to the present invention so as to define a right angle relative to each other.

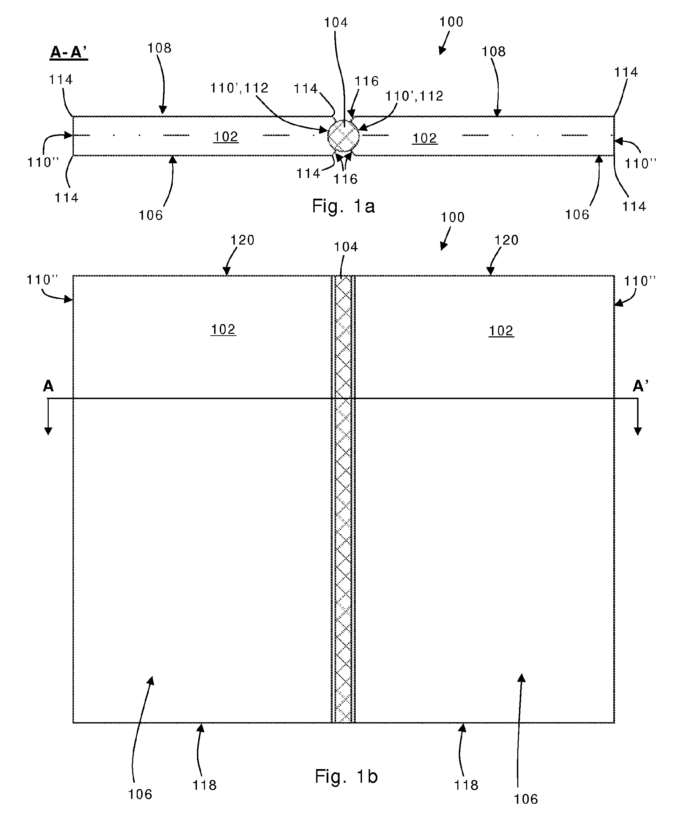

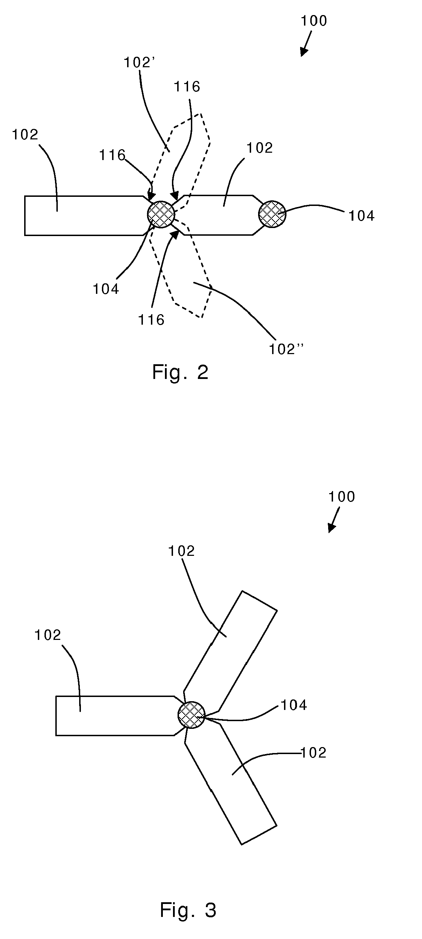

Fig. 1a and 1b illustrate a glazing assembly 100 comprising two sheets of glass 102 and a glazing joint 104. Fig. 1b is a front elevational view of the glazing assembly, and Fig. 1b illustrates a cross section A-A'. Each of the sheets of glass 102 defines a front surface 106 and a rear surface 108 which are interconnected by an side surface 110',110". On each sheet 102 in Figs. 1 a and 1b, one edge 110" defines a flat surface, while the other of the side surfaces 110' defines a recess 112 for receiving the glazing joint 104. An edge 114 is defined in the transition from the front/rear surface 106,108 to the side surface 110. Moreover, the side surface 110' defines a bevelled surface 116 extending between the edge 114 and the recess 112. The provision of the bevelled surface 116 increases the possible relative rotational positions between the two sheets of glass 102 as is described in further detail below in relation to Fig. 2. The sheets of glass 102 are fastened to the glazing joint by means of an adhesive (not shown). The glazing assembly 100 may be erected in the following manner. Initially a first of the sheets of glass 102 may be erected. In most cases each sheet of glass 102 will be fixed at its bottom 118 and/or its top 120 e.g. to a floor or a ceiling, respectively. Such fixation may be achieved by means of a rail. Subsequently, the glazing joint 104 is attached to the recess 112 of the sheet of glass 102 by application of an adhesive to the recess and/or the outer surface of the glazing joint. Afterwards, the second sheet of glass 102 is moved into engagement with the glazing joint, e.g. by providing the sheet of glass the aforementioned rail and sliding the sheet of glass into contact with the glazing joint. It will be appreciated, that the adhesive is applied to the recess and/or the glazing joint before the sheet of glass is slided into contact with the glazing joint.

Fig. 2 illustrates the possible rotational positions of two sheets of glass 102',102". The two extreme positions of the sheet of glass 102',102" are indicated by a dotted lines, and it will be appreciated that the application of the bevelled surface 116, increases the angle between the two extreme positions, and that the more acute the angle defined between the bevelled surface 116 and a centre line (not shown) of the sheet of glass is, the larger the angle between the two extreme positions will be. Moreover, it will be appreciated that the larger the diameter of the glazing joint is - relative to the thickness of the sheet of glass - the larger the angle between the two extreme positions will be. Especially when the diameter of the glazing joint is larger that the thickness of the sheet of glass.

Fig. 3 illustrates a further advantage of the present invention, namely that the glazing joint 104 allows more than two sheets of glass to be fastened to the glazing joint. In the case of Fig. 3, three sheets of glass are fastened to the glazing joint. However again it will be appreciated, that the larger the diameter of the glazing joint is - relative to the thickness of the sheets of glass the more sheets of glass - may be fastened to the glazing joint. Especially it will be realised, that if the diameter of the glazing joint is larger that the thickness of the sheets of glass, a large number of such sheets of glass may be fastened to the glazing joint.

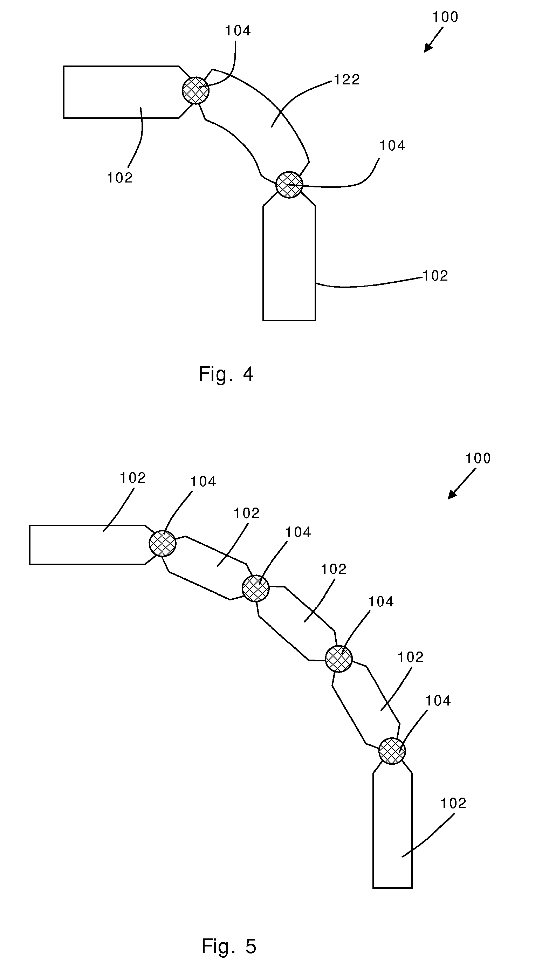

Fig. 3 and 4 illustrate two different embodiments of a curved glass assembly/wall 1 00. In the embodiment of Fig. 3, the glass assembly comprises a curved sheet of glass 122. As such curved sheet of glass 122 are normally expensive to manufacture, it will be appreciated that the present invention provides a cheap alternative by allowing two sheets of glass to be provided in any desired angle relative to each other. Accordingly, a cheap alternative to the solution of Fig. 3 is the provision of a large number short linear sheets of glass 102 and attaching said glasses to each other by means of the glazing joint according to the present invention.

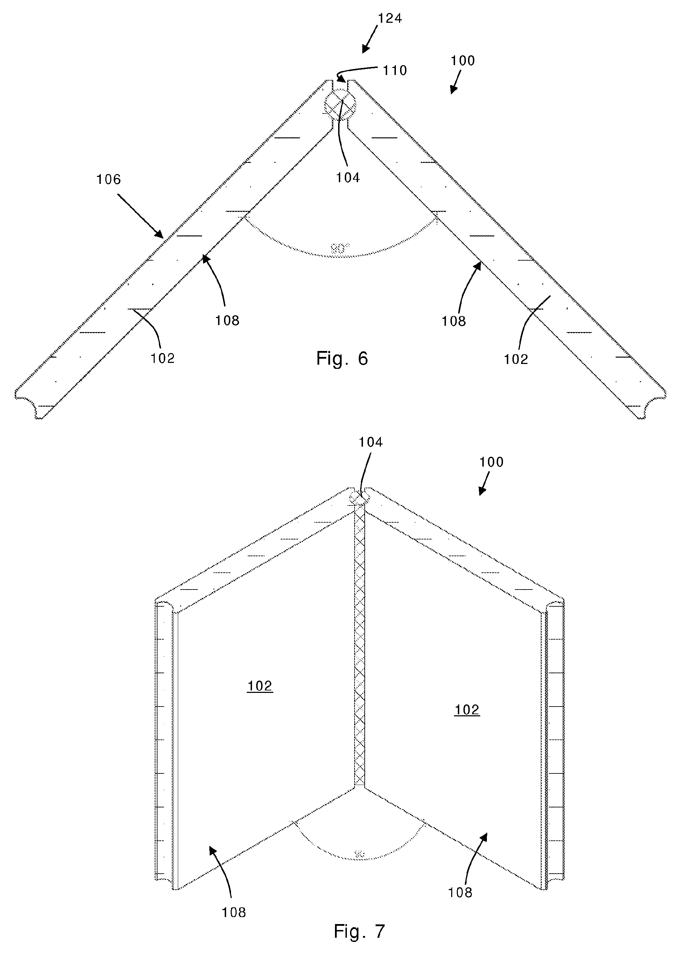

In the embodiment of Fig. 6 and 7, one end of each of two sheets 102 defines an side surface 110 which extends in a direction transverse to the longitudinal direction of the sheet of glass 102, which direction is different from 90 degrees. In n the embodiment, the side surface 110 extends in a direction which defines a 45 degree angle with the front and the rear surface 106,108 of the sheet of glass 102. It will be appreciated, that the provision of such an side surface 110 limits the possible relative rotational positions of the two sheets of glass, while providing a sharper corner point 124, which may be desirable from an architectural point of view. Moreover, it will be appreciated that the glazing joint need not be modified in the embodiment of Figs. 6 and 7 as the sharp corner point 124 is provided by processing the sheets of glass 102 in a different way.

## Claims

1. A glazing joint for joining at least two sheets of glass to each other, each glass defining a front and a rear surface interconnected by an side surface, the glazing joint defining one or more fastening surfaces for fastening one side surface of each sheet of glass to the glazing joint, wherein the glazing joint is adapted to allow the sheets of glass to be fastened to the glazing joint in an infinite number of angular positions relative to each other.

2. A glazing joint according to claim 1, wherein the glazing joint is adapted to allow the sheets of glass to be adhered to the glazing joint in an infinite number of angular positions relative to each other.

3. A glazing joint according to claim 1 or 2, wherein the glazing joint is adapted to allow visual inspection through any part of the front and/or rear surface.

4. A glazing joint according to any of the preceding claims, wherein the glazing joint defines a circular cross-section.

5. A glazing joint according to any of the preceding claims, wherein one or more of the side surfaces of each sheet of glass defines a recess for receiving the glazing joint.

6. A glazing joint according to any of the preceding claims, wherein the glazing joint is transparent.

7. A sheet of glass adapted to be adhered to a glazing joint according to any of claims 1-6, wherein one side surface of the sheet of glass defines a recess for receiving the glazing joint.

8. A sheet of glass according to claim 6, wherein a bevelled surface is defined between the recess and each of the front and the rear surface.

9. A glass assembly comprising two sheets of glass according to any of claims 7-8 and a glazing joint according to any of claims 1-6, wherein one side surface of each of the two sheets of glass is fastened to the glazing joint.

10. A glass assembly according to claim 9, wherein the one side surface of each of the two sheets of glass is adhered to the glazing joint.

11. A method of joining two sheets of glass according to any of claims 7-8 to a glazing joint according to any of claims 1-6, the method comprising the steps of:
- providing the two sheets of glass,
- providing the glazing joint,
- applying an adhesive to the outer surface of the glazing joint and/or one or more of the recesses of the sheets of glass, and
- moving the recesses of the sheets of glass into engagement with the glazing joint.
